(19) Europäisches Patentamt / European Patent Office / Office européen des brevets

(11) **EP 1 989 264 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(21) Anmeldenummer: **07703018.7**

(22) Anmeldetag: **25.01.2007**

(51) Int Cl.:
*C09C 1/36* (2006.01)     *D21H 17/69* (2006.01)

(86) Internationale Anmeldenummer:
**PCT/EP2007/000625**

(87) Internationale Veröffentlichungsnummer:
**WO 2007/085445 (02.08.2007 Gazette 2007/31)**

(54) **TITANDIOXID-PIGMENT MIT HOHER OPAZITÄT UND VERFAHREN ZUR HERSTELLUNG**

TITANIUM DIOXIDE PIGMENT FEATURING GREAT OPACITY, AND METHOD FOR THE PRODUCTION THEREOF

PIGMENT AU DIOXYDE DE TITANE À FORTE OPACITÉ ET PROCÉDÉ DE FABRICATION DUDIT PIGMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.01.2006 DE 102006004344**

(43) Veröffentlichungstag der Anmeldung:
**12.11.2008 Patentblatt 2008/46**

(73) Patentinhaber: **KRONOS INTERNATIONAL, INC.**
**51307 Leverkusen (DE)**

(72) Erfinder:
• **BLUEMEL, Siegfried**
**40883 Ratingen-Eggerscheid (DE)**
• **DREWS-NICOLAI, Lydia**
**51057 Köln (DE)**
• **JUERGENS, Volker**
**57399 Kirchhundem (DE)**
• **SCHMITT, Volker**
**42799 Leichlingen (DE)**

(56) Entgegenhaltungen:
**EP-A1- 0 713 904     WO-A-2004/018568**
**WO-A-2004/061013     WO-A-2005/017049**
**DE-A1- 1 592 830     DE-A1- 2 101 859**
**US-B1- 6 200 375**

**Beschreibung**

Gebiet der Erfindung

Die Erfindung betrifft ein Titandioxid-Pigment mit hoher Opazität, ein Verfahren zur Herstellung und seine Verwendung in Dekorpapier oder Dekorfolien.

Technologischer Hintergrund der Erfindung

Dekorpapier bzw. Dekorfolien sind ein Bestandteil eines dekorativen, duroplastischen Beschichtungswerkstoffes, der vorzugsweise zur Veredelung von Möbeloberflächen, für Laminat-Fußböden und im Innenausbau eingesetzt wird. Als Laminate werden Schichtpress-Stoffe bezeichnet, in denen beispielsweise mehrere imprägnierte, aufeinander geschichtete Papiere bzw. Papiere und Hartfaser- oder Holzspanplatten miteinander verpresst sind. Durch die Verwendung von speziellen Kunstharzen wird eine außerordentlich hohe Kratz-, Stoß-, Chemikalien- und Hitzebeständigkeit der Laminate erreicht.

Die Verwendung von Dekorpapieren (worunter im Folgenden auch immer Dekorfolien verstanden werden sollen) ermöglicht die Herstellung dekorativer Oberflächen, wobei das Dekorpapier nicht nur als Deckpapier für z. B. unattraktive Holzwerkstoffoberflächen, sondern auch als Träger für das Kunstharz dient.

Zu den Anforderungen, die an ein Dekorpapier gestellt werden, gehören u.a. Opazität (Deckvermögen), Lichtechtheit (Vergrauungsstabilität), Farbechtheit, Nassfestigkeit, Imprägnierbarkeit und Bedruckbarkeit.

Die Wirtschaftlichkeit des Herstellverfahrens von Dekorpapieren wird u.a. von der Opazität des Pigments im Papier bestimmt. Um die erforderliche Opazität des Dekorpapiers zu erzielen, ist ein Pigment auf Basis Titandioxid prinzipiell hervorragend geeignet. Bei der Papierherstellung wird in der Regel ein Titandioxid-Pigment bzw. eine Titandioxid-Pigment-Suspension mit einer Zellstoff-Suspension vermengt. Neben den Einsatzstoffen Pigment und Zellstoff kommen im allgemeinen auch Hilfsstoffe wie z. B. Nassfestmittel und gegebenenfalls weitere Zusatzstoffe zum Einsatz. Die Wechselwirkungen der einzelnen Komponenten (Zellstoff, Pigment, Hilfs- und Zusatzstoffe, Wasser) untereinander tragen zur Papierbildung bei und bestimmen die Retention des Pigments. Unter Retention versteht man das Rückhaltevermögen aller anorganischen Stoffe im Papier bei der Herstellung. Hierbei spielt die Oberflächenladung des Pigments im Verhältnis zur Zellstoff-Faser eine wichtige Rolle.

Es ist bekannt, dass eine Verbesserung der Opazität durch spezielle Oberflächenbehandlungen am Titandioxid-Pigment erreicht werden kann.

In. der EP 0 713 904 B1 wird eine Oberflächenbehandlung beschrieben, bei der eine erste Schicht von Aluminiumoxidphosphat bei einem sauren pH-Wert von 4 bis 6 aufgebracht wird und eine zweite Schicht Aluminiumoxid in einem pH-Bereich von 3 bis 10, bevorzugt bei pH etwa 7 gefällt wird. Eine Verbesserung in der Retention wird durch eine dritte Schicht aus Magnesiumoxid erzielt, so dass das hergestellte Pigment durch aufeinander folgende Schichten von Aluminiumoxidphosphat, Aluminiumoxid und Magnesiumoxid gekennzeichnet ist.

Die DE 102 36 366 A1 offenbart ein Verfahren zur Oberflächenbehandlung eines TitandioxidPigments, bei dem zunächst eine Phosphor-, Titan- und Aluminiumkomponente und anschließend bei einem pH-Wert von 8 bis 10 eine Magnesiumkomponente aufgefällt werden. Diese Pigmente sollen eine verbesserte Lichtechtheit und eine hohe Opazität aufweisen.

Die DE 103 32 650 A1 beschreibt ein Verfahren zur Oberflächenbehandlung eines Titandioxid-Pigments bei dem eine Aluminium- und eine Phosphorkomponente bei einem pH-Wert von mindestens 10 in die $TiO_2$-Oberflächenbehandlungssuspension eingebracht werden und anschließend bei einem pH-Wert von unter 9 aufgefällt werden. Das Verfahren soll zu einer verbesserten Retention bei gleicher Opazität führen.

Die US 6,200,375 offenbart ein witterungsstabiles Titandioxid-Pigment für Außenbeschichtungen, wobei die Partikel auf der Oberfläche aufeinanderfolgende Schichten von Zirkonhydroxid, Titanhydroxid, Phosphat / Siliciumoxid und Aluminiumoxidhydrat aufweisen.

Aufgabenstellung und Kurzfassung der Erfindung

Aufgabe der Erfindung ist die Bereitstellung eines Titandioxid-Pigments für die Verwendung in Dekorpapieren mit gegenüber dem Stand der Technik erhöhter Opazität. Aufgabe der Erfindung ist weiterhin die Bereitstellung eines Verfahrens zur Herstellung eines solchen Titandioxid-Pigments.

Die Aufgabe wird gelöst durch ein Titandioxid-Pigment, welches beschichtete Rutil-Titandioxid-Partikel enthält, wobei die Beschichtung Aluminiumphosphat, Aluminiumoxid, Titanoxid und Siliciumoxid enthält und die spezifische Oberfläche nach BET mindestens 15 $m^2$/g beträgt.

Die Aufgabe wird weiterhin gelöst durch ein Verfahren zur Herstellung eines beschichteten Titandioxid-Pigments enthaltend die Schritte

a) Bereitstellen einer wässrigen Suspension unbeschichteter Titandioxid-Partikel,

b) Zugabe einer Aluminium- und einer Phosphor-Komponente,

c) Zugabe einer alkalischen Silicium-Komponente und mindestens einer pH-Wert regulierenden Komponente, wobei eine der pH-Wert regulierenden Komponenten eine sauer reagierende Titan-Komponente ist und wobei der pH-Wert der Suspension auf einen Wert in dem Bereich von 4 bis 9 eingestellt wird.

Weitere vorteilhafte Varianten der Erfindung sind in den Unteransprüchen beschrieben.

Beschreibung der Erfindung

Hier und im Folgenden sollen unter "Oxid" auch die entsprechenden wasserhaltigen Oxide bzw. die Hydrate verstanden werden. Alle im Folgenden offenbarten Angaben bezüglich pH-Wert, Temperatur, Konzentration in Gew.-% oder Vol.-% usw. sind so zu verstehen, dass alle Werte, die im Bereich der dem Fachmann bekannten jeweiligen Messgenauigkeit liegen, mitumfasst sind. Die Angabe "signifikante Menge" oder "signifikanter Anteil" im Rahmen des vorliegenden Patents kennzeichnet die Mindestmenge einer Komponente, ab der die Eigenschaften der Mischung im Rahmen der Messgenauigkeit beeinflusst werden.

Das erfindungsgemäße Titandioxid-Pigment ist vorzugsweise ein Rutil-Titandioxid. Es zeichnet sich dadurch aus, dass auf der Partikeloberfläche eine Schicht aus Aluminium-Phosphor-Titan-Silicium-haltigen Verbindungen vorhanden ist. Bei der Siliciumverbindung handelt es sich um Siliciumoxid und/oder möglicherweise um Siliciumtitanat. Die Kombination einer Silicium- und einer Titan-Komponente in dem Verfahrensschritt c) führt zu einer Fällung in lockerer Form, wodurch sich eine Erhöhung der spezifischen Oberfläche nach BET auf Werte von mindestens 15 $m^2$/g, bevorzugt 20 bis 60 $m^2$/g, insbesondere 20 bis 35 $m^2$/g und eine verbesserte Opazität ergibt. Die sauer reagierende Titan-Komponente wirkt hier vorteilhaft.

Bei dem erfindungsgemäßen Verfahren wird auf der Titandioxid-Partikeloberfläche eine Schicht aus Aluminium-Phosphor-Titan-Silicium-haltigen Verbindungen abgeschieden, im Folgenden vereinfacht als Mischschicht bezeichnet. Zunächst werden eine Aluminium- und eine Phosphorkomponente in die $TiO_2$-Suspension gegeben, wobei der pH-Wert der Suspension sowohl im sauren wie im alkalischen Bereich liegen kann. Anschließend werden eine alkalische Silicium-Komponente und eine sauer reagierende Titan-Komponente und optional mindestens eine weitere pH-Wert regulierende Komponente einzeln in beliebiger Reihenfolge oder gemeinsam in die Suspension gegeben, worauf der pH-Wert in dem Bereich von 4 bis 9 liegt und sich die Mischschicht auf der Partikeloberfläche abscheidet.

Das der Erfindung zugrunde liegende Oberflächenbehandlungsverfahren geht von einer wässrigen und bevorzugt nassgemahlenen $TiO_2$-Suspension aus (Schritt a). Die Nassmahlung wird gegebenenfalls in Gegenwart eines Dispergiermittels durchgeführt. Die Oberflächenbehandlung findet nicht während der Nassmahlung statt. Bei dem $TiO_2$ handelt es sich um unbeschichtete $TiO_2$-Partikel, d.h. um $TiO_2$-Grundkörper-Partikel hergestellt nach dem Sulfat(SP)- oder Chlorid(CP)-Verfahren. Die Grundkörper sind üblicherweise stabilisiert, im CP-Verfahren durch Zugabe von Aluminium in Höhe von 0,3 bis 3 Gew.-% gerechnet als $Al_2O_3$ und einem Sauerstoffüberschuss in der Gasphase bei der Oxidation des Titantetrachlorids zu Titandioxid von 2 bis 15 % und im SP-Verfahren durch Dotierung mit z.B. Al, Sb, Nb oder Zn.

Bevorzugt wird Rutil eingesetzt, insbesondere hergestellt im Chloridprozess. Das Oberflächenbehandlungsverfahren wird bevorzugt bei einer Temperatur von unter 80 °C, insbesondere bei 55 bis 65 °C durchgeführt.

Die Suspension in Schritt a) kann sowohl alkalisch als auch sauer eingestellt sein.

In einem Schritt b) werden eine Aluminium- und eine Phosphor-Komponente zugegeben. Geeignete Aluminium-Komponenten für das erfindungsgemäße

Oberflächenbehandlungsverfahren sind alkalisch oder sauer reagierende wasserlösliche Salze, beispielsweise Natriumaluminat, Aluminiumsulfat, Aluminiumnitrat, Aluminiumchlorid, Aluminiumacetat etc. Diese Auswahl ist nicht als Einschränkung zu verstehen. Die Aluminium-Komponente soll in einer Menge von 1,0 bis 9,0 Gew.-%, bevorzugt 1,5 bis 4,5 Gew.-% gerechnet als $Al_2O_3$ und bezogen auf den $TiO_2$-Partikel zugegeben werden. Geeignete Phosphor-Komponenten sind anorganische Verbindungen wie Alkaliphosphate, Ammoniumphosphat, Polyphosphate, Phosphorsäure etc. Diese Auswahl ist nicht als Einschränkung zu verstehen. Besonders geeignet sind Dinatrium-Hydrogenphosphat oder Phosphorsäure. Die Phosphor-Komponente wird in einer Konzentration von 1,0 bis 5,0 Gew.-%, bevorzugt 1,5 bis 4,0 Gew.-% gerechnet als $P_2O_5$ bezogen auf den $TiO_2$-Partikel zugegeben.

In einem Schritt c) werden eine alkalische Silicium-Komponente und eine sauer reagierende Titan-Komponente sowie optional eine oder mehrere weitere pH-Wert regulierende Komponenten zugegeben, so dass sich ein pH-Wert im Bereich von 4 bis 9, vorzugsweise im Bereich 4 bis 6 und insbesondere ein pH-Wert von etwa 5 einstellt. Bei der alkalischen Silicium-Komponente handelt es sich bevorzugt um Natrium- oder Kaliumwasserglas. Es werden 0,1 bis 5,0 Gew.-% bevorzugt 1,0 bis 3,0 Gew.-% $SiO_2$ bezogen auf die unbeschichteten $TiO_2$-Partikel zugegeben.

Bei der sauren Titan-Komponente handelt es sich bevorzugt um Titanoxidchlorid oder Titanoxidsulfat. Von der Titan-Komponente werden 0,1 bis 6,0 Gew.-% gerechnet als $TiO_2$ bezogen auf die unbeschichteten $TiO_2$-Partikel zugegeben.

Die eingesetzte pH-Wert regulierende Komponente kann eine Säure oder eine Lauge sein. Als Säure können beispielsweise Schwefelsäure, Salzsäure, Phosphorsäure oder eine andere geeignete Säure eingesetzt werden. Des weiteren kann an Stelle der Säure auch ein entsprechendes sauer reagierendes Salz wie beispielsweise Aluminiumsulfat verwendet werden. Als Lauge wird bevorzugt Natronlauge verwendet. Geeignet sind auch alkalisch reagierende Salze. Dem Fachmann sind geeignete pH-Wert regulierende Verbindungen bekannt. Die Auswahl ist deswegen nicht als Einschränkung der Erfindung zu verstehen.

Es hat sich als vorteilhaft erwiesen, in einem dann folgenden Schritt d) auf die Mischschicht eine Schicht aus Aluminiumoxid dergestalt aufzubringen, dass durch die parallele Zugabe einer alkalischen und einer sauren Aluminium-Komponente (z.B. Natriumaluminat / Aluminiumsulfat) oder durch die Zugabe einer alkalischen Aluminium-Komponente wie Natriumaluminat und einer Säure, beispielsweise Schwefelsäure oder Salzsäure oder durch die Zugabe einer sauren Aluminium-Komponente wie z.B. Aluminiumsulfat zusammen mit einer Lauge wie z.B. NaOH der pH-Wert im Bereich von 4 bis 9 gehalten wird. Dabei können die Komponenten entweder so zugegeben werden, dass der pH-Wert konstant auf einem Wert in dem Bereich 4 bis 9 bleibt. Oder die Komponenten werden in einer solchen Kombination zugegeben, dass der pH-Wert während der Zugabe innerhalb des pH-WerteBereichs 4 bis 9 variiert. Dem Fachmann sind diese Verfahrensweisen bekannt. Zur Einstellung des pH-Werts eignen sich beispielsweise Laugen oder Säuren (z. B. NaOH / $H_2SO_4$) oder alkalisch oder sauer reagierende Salzlösungen (z. B. Natriumaluminat / Aluminiumsulfat). Als besonders vorteilhaft hat sich herausgestellt, die Behandlung bei dem pH-Wert durchzuführen, der in Schritt c) eingestellt wurde.

Nach Bedarf erfolgt abschließend in einem Schritt e) die Einstellung des pH-Werts auf etwa 6 bis 7, beispielsweise mit Laugen / Säuren (z.B. NaOH / $H_2SO_4$) oder mit alkalischen / sauren Salzlösungen wie Natriumaluminat / Aluminiumsulfat.

Die Menge der in den Schritten c), d) und e) eingesetzten Aluminium-Komponenten gerechnet als $Al_2O_3$ ist auf die bereits in Schritt b) verwendete Menge $Al_2O_3$ anzurechnen. Die Summe der in den Schritten b) bis e) eingesetzten Aluminium-Komponenten gerechnet als $Al_2O_3$ bezogen auf den unbeschichteten $TiO_2$-Partikel beträgt idealer Weise 1,0 - 9,0 Gew.-%, bevorzugt 2,0 bis 8,0 Gew.-% und insbesondere 3,0 bis 6,5 Gew.-%. Ebenso ist die Menge der gegebenenfalls in den Schritten c) und d) eingesetzten Phosphorkomponente gerechnet als $P_2O_5$ auf die in Schritt b) verwendete Menge $P_2O_5$ anzurechnen. Die Summe der in den Schritten b) bis d) eingesetzten Phosphor-Komponenten gerechnet als $P_2O_5$ beträgt idealer Weise 1,0 bis 5,0 Gew.-%, bevorzugt 1,5 bis 4,0 Gew.-% gerechnet als $P_2O_5$ bezogen auf den unbeschichteten $TiO_2$-Partikel.

In einer besonderen Ausführung des erfindungsgemäßen Verfahrens werden keine signifikanten Mengen einer Zr- oder einer Ce-Komponente eingesetzt.

In der Regel ist es nicht erforderlich, das oberflächenbehandelte Pigment abschließend einer Wärmebehandlung bei Temperaturen > 200 °C zu unterziehen.

In einer bevorzugten Ausbildung des erfindungsgemäßen Verfahrens wird von einer alkalischen $TiO_2$-Suspension ausgegangen. Dazu wird in Schritt a) die Suspension zunächst mit geeigneten alkalischen Verbindungen, z.B. NaOH, auf einen pH-Wert von mindestens 10 eingestellt. Dies geschieht, falls eine Nassmahlung stattfindet, idealer Weise vor der Mahlung.

In Schritt b) wird nachfolgend eine Aluminium- und eine Phosphor-Komponente jeweils in Form einer wässrigen Lösung in die Suspension gegeben. Während der Zugabe der Komponenten wird der pH-Wert der Suspension auf mindestens 10, vorzugsweise auf mindestens 10,5 und insbesondere bevorzugt auf mindestens 11 gehalten.

Als alkalische Aluminium-Komponente besonders geeignet ist Natriumaluminat. Handelt es sich um eine sauer reagierende Verbindung beispielsweise Aluminiumsulfat, die bei Zugabe den pH-Wert auf unter 10 senken würde, hat es sich als vorteilhaft erwiesen, diesen Effekt durch Zugabe einer geeigneten alkalischen Verbindung wie NaOH zu kompensieren. Dem Fachmann sind die geeigneten alkalischen Verbindungen und die notwendigen Mengen, um den pH-Wert bei mindestens 10 zu halten, geläufig.

Im Falle von Phosphor-Komponenten, bei deren Zugabe der pH-Wert auf unter 10 gesenkt würde, hat es sich ebenfalls als vorteilhaft erwiesen, diesen Effekt durch Zugabe einer geeigneten alkalischen Verbindung wie NaOH zu kompensieren. Dem Fachmann sind die geeigneten alkalischen Verbindungen und die notwendigen Mengen, um den pH-Wert bei mindestens 10 zu halten, geläufig.

Die Al- und die P- Komponente können der Suspension in beliebiger Reihenfolge einzeln nacheinander oder gleichzeitig zugeführt werden.

In Schritt c) erfolgt anschließend die Zugabe einer alkalischen Silicium-Komponente sowie die Zugabe einer sauer reagierende Titan-Komponente und gegebenenfalls die zusätzliche Zugabe mindestens einer weiteren pH-Wert regulierenden Komponente, um den pH-Wert auf einen Wert in dem Bereich von 4 bis 9 einzustellen.

Die Zugabe der Silicium- und der sauer reagierenden Titan-Komponente und der weiteren pH-regulierenden Komponente/n kann sowohl nacheinander oder gleichzeitig als auch mehrstufig und in beliebiger Reihenfolge erfolgen.

Die alkalische Silicium-Komponente ist bevorzugt Natrium- oder Kaliumwasserglas.

Die Titan-Komponente ist bevorzugt Titanoxidchlorid. Die zusätzlich eingesetzte sauer reagierende Komponente ist bevorzugt Salzsäure.

In einer alternativen Ausbildung des erfindungsgemäßen Verfahrens wird die erfindungsgemäße Oberflächenbehandlung aus dem sauren pH-Wert-Bereich heraus begonnen.

Dabei werden in Schritt b) solche Aluminium- und Phosphor-Komponenten zugegeben, dass der pH-Wert der Suspension nachfolgend bei einem Wert unter 4 liegt. Dem Fachmann bleibt es überlassen, ob er bereits in Schritt a) mit einer geeigneten Säure den pH-Wert senkt oder ob er in Schritt b) durch eine geeignete Kombination der Komponenten gegebenenfalls unter Zusatz einer Säure den pH-Wert auf unter 4 senkt. Beispielsweise sind die Kombinationen Phosphorsäure / Natriumaluminat oder Dinatrium-Hydrogenphosphat / Aluminiumsulfat geeignet. Die Komponenten können der Suspension in beliebiger Reihenfolge einzeln nacheinander oder gleichzeitig zugeführt werden.

In Schritt c) werden die alkalische Silicium-Komponente, bevorzugt Natrium- oder Kaliumwasserglas, und die sauer reagierende Titan-Komponente, bevorzugt Titanoxidchlorid, zugegeben. Gegebenenfalls ist die Zugabe einer weiteren pH-Wert regulierenden Komponente erforderlich, um den pH-Wert auf einen Wert in dem Bereich von 4 bis 9 einzustellen. Die Zugabe der Komponenten in Schritt c) kann sowohl nacheinander oder gleichzeitig als auch mehrstufig und in beliebiger Reihenfolge erfolgen. Je nach Menge, Art und Reihenfolge der in Schritt c) zugegebenen Komponenten kann der pH-Wert der Suspension im Verlaufe der einzelnen Zugaben kurzfristig auf Werte über 9 steigen.

Das oberflächenbehandelte $TiO_2$-Pigment wird durch dem Fachmann bekannte Methoden der Filtration von der Suspension abgetrennt und der entstandene Filterkuchen gewaschen, um die löslichen Salze zu entfernen. Der gewaschenen Filterpaste kann zur Verbesserung der Lichtechtheit des Pigments im Laminat vor oder während der anschließenden Trocknung eine nitrathaltige Verbindung, z.B. $KNO_3$, $NaNO_3$, $Al(NO_3)_3$ in einer Menge von 0,05 bis 1,0 Gew.-% gerechnet als $NO_3$, zugemengt werden. Bei der anschließenden Mahlung, beispielsweise mit einer Dampfmühle, kann dem Pigment eine organische Verbindung zugefügt werden aus der Reihe derer, wie sie bei der Herstellung von $TiO_2$-Pigmenten üblicherweise verwendet werden und die dem Fachmann bekannt sind wie z.B. Polyalkohole (Trimethylolpropan). Alternativ zur Zugabe der nitrathaltigen Verbindungen vor oder während der Trocknung kann die Zugabe solcher Substanzen auch während der Mahlung erfolgen.

Das nach diesem Verfahren hergestellte Pigment zeigt gegenüber den Vergleichspigmenten eine verbesserte Opazität und ist für den Einsatz im Dekorpapier bestens geeignet.

Des weiteren zeichnet sich das erfindungsgemäße Titandioxid-Pigment dadurch aus, dass über die Menge an ausgefälltem $TiO_2$ bzw. $SiO_2$ in Schritt c) und $Al_2O_3$ in Schritt d) die Lage des isoelektrischen Punkts (IEP) eingestellt werden kann. Der IEP kennzeichnet den pH-Wert der wässrigen Pigment-Suspension, an dem die Pigment-Oberflächenladung gegen Null geht. Somit kann die Oberflächenladung des erfindungsgemäßen Pigments ins Positive oder Negative verschoben werden, je nach Anforderung des Papierherstellprozesses.

Das erfindungsgemäße Oberflächenbehandlungsverfahren wird üblicherweise im Batchbetrieb durchgeführt. Es ist aber auch möglich, die Behandlung kontinuierlich zu führen, wobei durch geeignete Mischorgane, wie sie dem Fachmann bekannt sind, eine hinreichende Durchmischung garantiert sein muss.

Beispiele

Im Folgenden ist die Erfindung beispielhaft beschrieben, ohne dass dies als Einschränkung der Erfindung zu verstehen ist.

Beispiel 1:

Eine sandgemahlene Rutil-$TiO_2$-Suspension aus dem Chloridprözess mit einer $TiO_2$-Konzentration von 350 g/l wurde bei 60 °C mit NaOH auf einen pH-Wert von 10 eingestellt. Unter Rühren wurden der Suspension 3,5 Gew.-% $Al_2O_3$ als Natriumaluminat zugefügt. Nach einer Rührzeit von 10 Minuten wurden 2,4 Gew.-% $P_2O_5$ als Dinatrium-Hydrogenphosphat-Lösung zugefügt. Es folgte eine weitere Rührzeit von 10 Minuten. Die Suspension wurde im nächsten Schritt durch Zugabe von Titanoxidchlorid (entsprechend 3,0 Gew.-% $TiO_2$) und 2,4 Gew.-% $SiO_2$ in Form von Natriumwasserglas auf einen pH-Wert von 5 eingestellt. Die Zugabe des $SiO_2$ erfolgte dabei in 2 Stufen mit je 1,2 Gew.-% $SiO_2$ bei einem pH-Wert von 10,5 und von 7 parallel zur Titanoxidchlorid-Zugabe Nach 10 minütiger Rührzeit wurden anschließend 1,9 Gew.-% $Al_2O_3$ in Form einer parallelen Zugabe von Natriumaluminat-Lösung und HCl zugemischt, so dass der pH-Wert bei 5 gehalten wurde.

Die Suspension wurde nach einer Rührzeit von 30 Minuten mit Hilfe einer alkalischen Natriumaluminat-Lösung auf einen pH-Wert von ca. 5,8 eingestellt, filtriert und durch Waschen von den wasserlöslichen Salzen befreit. Die gewaschene Filterpaste wurde im Etagentrockner getrocknet und anschließend dampfgemahlen.

Das Pigment wies einen BET-Wert von 32 $m^2$/g auf, der isoelektrische Punkt lag bei einem pH-Wert von 5,2.

Bei der Blattherstellung wurde das Zetapotential der Dünnstoffsuspension durch Zugabe von Nassfestmittel jeweils auf einen Wert von +16 mV bzw. -12 mV eingestellt.

Beispiel 2:

Eine sandgemahlene Rutil-TiO$_2$-Suspension aus dem Chloridprozess mit einer TiO$_2$-Konzentration von 350 g/l wurde bei 60 °C mit NaOH auf einen pH-Wert von 10 eingestellt. Unter Rühren wurden der Suspension 3,5 Gew.-% Al$_2$O$_3$ als Natriumaluminat zugefügt. Nach einer Rührzeit von 10 Minuten wurden 2,4 Gew.-% P$_2$O$_5$ als Dinatrium-Hydrogenphosphat-Lösung zugefügt. Es folgte eine weitere Rührzeit von 10 Minuten. Die Suspension wurde im nächsten Schritt durch Zugabe von Titanoxidchlorid (entsprechend 2,8 Gew.-% TiO$_2$) auf einen pH-Wert von 5 eingestellt. Es wurden anschließend 1,2 Gew.-% SiO$_2$ in Form von Natriumwasserglas zugefügt. Nach 10 minütiger Rührzeit wurde der pH-Wert mit HCl auf 5 eingestellt. Anschließend wurden 1,9 Gew.-% Al$_2$O$_3$ in Form einer parallelen Zugabe von Natriumaluminat-Lösung und HCl zugemischt, so dass der pH-Wert bei 5 gehalten wurde. Die Suspension wurde nach einer Rührzeit von 30 Minuten mit Hilfe einer alkalischen Natriumaluminat-Lösung auf einen pH-Wert von ca. 5,8 eingestellt, filtriert und durch Waschen von den wasserlöslichen Salzen befreit. Die gewaschene Filterpaste wurde im Etagentrockner getrocknet und anschließend dampfgemahlen.
Das Pigment wies einen BET-Wert von 26 m$^2$/g auf, der isoelektrische Punkt lag bei einem pH-Wert von 6,0.

Bei der Blattherstellung wurde das Zetapotential der Dünnstoffsuspension durch Zugabe von Nassfestmittel jeweils auf einen Wert von +18 mV bzw. -14 mV eingestellt.

Beispiel 3:

Wie Beispiel 2, jedoch wurde das Natriumwasserglas (entsprechend 2,4 Gew.-% SiO$_2$) vor der Titanoxidchloridlösung (entsprechend 3,0 Gew.-% TiO$_2$) in die Suspension gegeben. Das Pigment wies einen BET-Wert von 30 m$^2$/g auf, der isoelektrische Punkt lag bei einem pH-Wert von 5,9.
Bei der Blattherstellung wurde das Zetapotential der Dünnstoffsuspension durch Zugabe von Nassfestmittel jeweils auf einen Wert von +12 mV bzw. -16 mV eingestellt.

Beispiel 4:

Wie Beispiel 3, jedoch wurden 1,2 Gew.-% SiO$_2$ und 2,9 Gew.-% TiO$_2$ eingesetzt.
Das Pigment wies einen BET-Wert von 27 m$^2$/g auf, der isoelektrische Punkt lag bei einem pH-Wert von 6,2.

Beispiel 5:

Wie Beispiel 3, jedoch wurden 0,6 Gew.-% SiO$_2$ und 2,9 Gew.-% TiO$_2$ eingesetzt.
Das Pigment wies einen BET-Wert von 26 m$^2$/g auf, der isoelektrische Punkt lag bei einem pH-Wert von 6,4.

Vergleichsbeispiel 1:

Eine sandgemahlene Rutil-TiO$_2$-Suspension aus dem Chloridprozess mit einer TiO$_2$-Konzentration von 350 g/l wurde bei 60 °C mit NaOH auf einen pH-Wert von 10 eingestellt.
Unter Rühren wurden der Suspension 2,0 Gew.-% Al$_2$O$_3$ als Natriumaluminat-Lösung zugefügt. Nach einer Rührzeit von 10 Minuten wurden der Suspension anschließend 2,4 Gew.-% P$_2$O$_5$ als Dinatrium-Hydrogenphosphat-Lösung zugemischt. Es folgte eine Rührzeit von 10 Minuten. Die Suspension wurde im nächsten Schritt durch Zugabe von Aluminiumsulfat-Lösung (entsprechend 2,6 Gew.% Al$_2$O$_3$) auf einen pH-Wert von 5 eingestellt. Es wurden anschließend 0,8 Gew.-% Al$_2$O$_3$ in Form einer parallelen Zugabe von Aluminiumsulfat und Natriumaluminat zugemischt, so dass der pH-Wert bei 5 gehalten wurde.
Die saure Suspension wurde nach einer Rührzeit von 30 Minuten mit Hilfe einer alkalischen Natriumaluminat-Lösung auf einen pH-Wert von ca. 5,8 eingestellt, filtriert und durch Waschen von den wasserlöslichen Salzen befreit. Die gewaschene Filterpaste wurde in einem Etagentrockner getrocknet und anschließend dampfgemahlen.
Das Pigment wies einen BET-Wert von 12 m$^2$/g auf.
Bei der Blattherstellung wurde das Zetapotential der Dünnstoffsuspension durch Zugabe von Nassfestmittel jeweils auf einen Wert von +16 mV eingestellt. Die Einstellung auf ein negatives Zetapotential führte zu einer unzureichenden Nassfestigkeit des Papiers.

Vergleichsbeispiel 2

Eine sandgemahlene Rutil-TiO$_2$-Suspension aus dem Chloridprozess mit einer TiO$_2$-Konzentration von 350 g/l wurde bei 60 °C mit NaOH auf einen pH-Wert von 10 eingestellt. Unter Rühren wurden der Suspension 2,0 Gew.-% Al$_2$O$_3$ als Natriumaluminat-Lösung zugefügt. Nach einer Rührzeit von 10 Minuten wurden der Suspension anschließend

2,4 Gew.-% $P_2O_5$ als Dinatrium-Hydrogenphosphat-Lösung zugemischt. Es folgte eine Rührzeit von 10 Minuten. Der Suspension wurde 1,0 Gew.-% $SiO_2$ in Form von Natriumwasserglas zugefügt. Im nächsten Schritt wurde die Suspension durch Zugabe von Aluminiumsulfat-Lösung (entsprechend 2,7 Gew.% $Al_2O_3$) auf einen pH-Wert von 5 eingestellt. Es wurden anschließend 0,8 Gew.-% $Al_2O_3$ in Form einer parallelen Zugabe von Aluminiumsulfat und Natriumaluminat zugemischt, so dass der pH-Wert bei 5 gehalten wurde.

Die saure Suspension wurde nach einer Rührzeit von 30 Minuten mit Hilfe einer alkalischen Natriumaluminat-Lösung auf einen pH-Wert von ca. 5,8 eingestellt, filtriert und durch Waschen von den wasserlöslichen Salzen befreit. Die gewaschene Filterpaste wurde in einem Sprühtrockner getrocknet und anschließend dampfgemahlen.

Das Pigment wies einen BET-Wert von 12 $m^2$/g auf.

Testmethoden

Für die Beurteilung der optischen Eigenschaften der Dekorpapiere und damit der Qualität des Titandioxidpigments ist es von Bedeutung, dass Dekorpapiere gleichen Aschegehalts verglichen werden. Es wurden Dekorpapier-Blätter mit einem Blattgewicht von etwa 80 g/$m^2$ und einem Aschegehalt von etwa 30 g/$m^2$ hergestellt.

Die Herstellung der Dekorpapier-Blätter erfolgte parallel nach zwei verschiedenen Verfahren: Bei dem sogenannten "Ein-Schritt-Verfahren" wurde zur Herstellung der Blätter das zu untersuchende Pigment gleichzeitig mit Zellstoff und handelsüblichem Nassfestmittel in Wasser dispergiert. Im Anschluss daran erfolgte die Blattbildung. Die Vorgehensweise ist dem Fachmann bekannt. Es wurde soviel Nassfestmittel zudosiert, bis das Zetapotential der Dünnstoffsuspension, gemessen mit einem System-Zetapotential-Messgerät Mütek SZP 06, im Bereich +10 mV bis +20 mV eingestellt war. Bei dem sogenannten "Split-Verfahren" wurden zunächst der Zellstoff und eine zuvor ermittelte Menge an Nassfestmittel in Wasser aufgeschlagen. Das zu untersuchende Pigment wurde erst nach einer Retentionszeit hinzugefügt und dispergiert. Im Anschluss daran erfolgte die Blattbildung. Die Vorgehensweise ist dem Fachmann bekannt.

Die benötigte Menge an Nassfestmittel wurde in einem gesonderten Test mit Hilfe des Zetapotentials der Dünnstoffsuspension ermittelt. Dafür wurde eine vorgegebene Menge Zellstoff und Titandioxid-Pigment in Wasser aufgeschlagen. Anschließend wurde soviel Nassfestmittel zudosiert, bis das Zetapotential der Dünnstoffsuspension im Bereichs -10 mV bis -20 mV eingestellt war. Die eingesetzte Menge Nassfestmittel lag für beide Verfahrensweisen in der üblichen Größenordnung von 1 bis 4 Gew.-% Nassfestmittel (Wirkstoff) bezogen auf Zellstoff (ofentrocken).

Der Titandioxid-Gehalt (Asche) eines Blattes sowie die Retention des Pigments wurden anschließend bestimmt.

a) Aschegehalt

Zur Bestimmung des Titandioxid-Gehalts wurde eine definierte Gewichtsmenge des hergestellten Papiers mit einem Schnellverascher bei 900 °C verascht. Über die Auswaage des Rückstands ergab sich der Massenanteil an $TiO_2$ (Asche) in Gew.-%. Zur Berechnung des Aschegehalts wurde folgende Formel zugrunde gelegt :

$$\text{Aschegehalt } [g/m^2] = (\text{Asche } [Gew.-\%] \times \text{Flächengewicht } [g/m^2]) / 100 \, [\%].$$

b) Optische Eigenschaften

Die optischen Eigenschaften der Pigmente wurden in Laminaten bestimmt.

Dazu wurde das Dekorpapier mit einem modifizierten Melamintränkharz imprägniert und zu Laminaten verpresst. Das zu beharzende Blatt wurde in der Melaminharzlösung vollständig eingetaucht, danach zwischen 2 Rakel gezogen, um einen bestimmten Harzauftrag zu gewährleisten, und unmittelbar danach im Umlufttrockenschrank bei 130 °C vorkondensiert. Der Harzauftrag betrug 120 bis 140 % des Blattgewichts. Das Blatt hatte eine Restfeuchte von ca. 6 Gew.-%. Die kondensierten Blätter wurden mit Phenolharz getränkten Kernpapieren und weiß/schwarzem Underlay-Papier zu Presspaketen zusammengelegt. Für die Beurteilung der Versuchspigmente bestand der Laminataufbau aus 11 Schichten: Dekorpapier, weiß/schwarzes Underlay, Kernpapier, Kernpapier, Kernpapier, weißes Underlay, Kernpapier, Kernpapier, Kernpapier, weiß/schwarzes Underlay, Dekorpapier. Das Pressen der Pakete erfolgt mit Hilfe einer Wickert Laminat-Presse Typ 2742 bei einer Temperatur von 140°C und einem Druck von 900 N/$cm^2$ für eine Presszeit von 300 Sekunden.

Die Messung der optischen Eigenschaften der Laminate erfolgte mit einem handelsüblichen Spektralphotometer.

Zur Beurteilung der optischen Eigenschaften von Schichtpress-Stoffen wurden die Farbwerte der Dekorpapiere (CIELAB L*, -a*, -b*) nach DIN 6174 mit Hilfe des ELREPHO® 3000-Farbmessgeräts über weißem und schwarzem Underlay bestimmt. Die Opazität ist ein Maß für die Lichtdurchlässigkeit oder Transmission des Papiers. Als Maß für die Opazität der Laminate wurden folgende Größen gewählt: CIELAB L*$_{schwarz}$, die Helligkeit der Laminate gemessen über schwarzem Underlay-Papier, und der Opazitätswert L [%] = ($Y_{schwarz}/Y_{weiß}$) x 100, ermittelt aus dem Y-Wert der Dekorpapiere gemessen über schwarzem Unterlay-Papier ($Y_{schwarz}$) und dem Y-Wert gemessen über weißem Underlay-Papier ($Y_{Weiß}$).

c) Spezifische Oberfläche nach BET (Brunauer-Emmett-Teller)

Die BET-Oberfläche wurde mit einem Tristar 3000 der Fa. Micromeritics nach dem statisch volumetrischen Prinzip gemessen.

d) Isoelektrischer Punkt

Die Messmethode beruht auf der Bestimmung der elektrophoretischen Mobilität der Pigmentteilchen in einer Elektrolytlösung unter Anlegen eines elektrischen Feldes. Das zu untersuchende Pigment wurde in 0,01 M wässriger KCl-Lösung dispergiert. Danach wurde der Verlauf des Zetapotentials der Probe in Abhängigkeit des pH-Werts mit einem Zetasizer 3000 HSA der Fa. Malvern ermittelt. Der isoelektrische Punkt kennzeichnet den pH-Wert, an dem das Zetapotential Null beträgt.

Testergebnisse

| Pigment | BET [m²/g] | Opazität (+) | | Opazität (-) | |
|---|---|---|---|---|---|
| | | $L^*_{schwarz}$ | L[%] | $L^*_{schwarz}$ | L[%] |
| Beispiel 1 | 32 | 90,7 | 91,9 | 90,8 | 92,2 |
| Beispiel 2 | 26 | 90,4 | 91,5 | 90,8 | 92,3 |
| Beispiel 3 | 30 | 90,5 | 91,6 | 90,9 | 92,2 |
| Vergleichsbeispiel 1 | 12 | 90,2 | 91,0 | -- | -- |
| Vergleichsbeispiel 2 | 12 | 90,3 | 91,0 | n.d. | n.d. |

(+) Zetapotential der Dünnstoffsuspension positiv eingestellt
(-) Zetapotential der Dünnstoffsuspension negativ eingestellt
- keine ausreichende Nassfestigkeft des Papiers erreichbar
n.d. nicht gemessen

Die erfindungsgemäßen Beispiel-Pigmente 1, 2 und 3 zeigen eine verbesserte Opazität und höhere BET-Werte gegenüber den Vergleichs-Pigmenten 1 und 2.
Die Beispiel-Pigmente 1 und 2 bzw. 3, 4 und 5 zeigen außerdem, dass mit steigendem $SiO_2$-Gehalt in der Beschichtung der isoelektrische Punkt (IEP) zu niedrigeren pH-Werten verschoben wird. Im Gegensatz zu dem Vergleichs-Pigment 1 kann mit den Beispielpigmenten bei Zugabe üblicher Mengen Nassfestmittel sowohl ein positives wie ein negatives Zetapotential eingestellt werden.

**Patentansprüche**

1.  Titandioxid-Pigment enthaltend
    beschichtete Rutil-Titandioxid-Partikel,
    wobei die Beschichtung Aluminiumphosphat, Aluminiumoxid, Titanoxid und Siliciumoxid enthält und die spezifische Oberfläche nach BET mindestens 15 m²/g, bevorzugt 20 bis 60 m²/g, insbesondere 20 bis 35 m²/g beträgt.

2.  Titandioxid-Pigment nach Anspruch 1 **dadurch gekennzeichnet, dass** der Aluminiumgehalt der Beschichtung 1,0 bis 9,0 Gew.-% bevorzugt 2,0 bis 8,0 Gew.%, insbesondere 3,0 bis 6,5 Gew.-% gerechnet als $Al_2O_3$ beträgt.

3.  Titandioxid-Pigment nach Anspruch 1 oder 2 **dadurch gekennzeichnet, dass** der Phosphorgehalt der Beschichtung 1,0 bis 5,0 Gew.-% bevorzugt 1,5 bis 4,0 Gew.% gerechnet als $P_2O_5$ beträgt.

4.  Titandioxid-Pigment nach einem oder mehreren der Ansprüche 1 bis 3 **dadurch gekennzeichnet, dass** der Siliciumgehalt der Beschichtung 0,1 bis 5,0 Gew.-% bevorzugt 1,0 bis 3,0 Gew.-% gerechnet als $SiO_2$ beträgt.

5. Titandioxid-Pigment nach einem oder mehreren der Ansprüche 1 bis 4 **dadurch gekennzeichnet, dass** der Titangehalt der Beschichtung 0,1 bis 6,0 Gew.-% gerechnet als $TiO_2$ beträgt.

6. Verfahren zur Herstellung eines beschichteten Titandioxid-Pigments enthaltend die Schritte

    a) Bereitstellen einer wässrigen Suspension unbeschichteter Titandioxid-Partikel,
    b) Zugabe einer Aluminium- und einer Phosphor-Komponente,
    c) Zugabe einer alkalischen Silicium-Komponente und mindestens einer pH-Wert regulierenden Komponente, wobei eine der pH-Wert regulierenden Komponenten eine sauer reagierende Titan-Komponente ist und wobei der pH-Wert der Suspension auf einen Wert in dem Bereich von 4 bis 9 eingestellt wird.

7. Verfahren nach Anspruch 6 **dadurch gekennzeichnet, dass** nach Schritt c) in einem Schritt d) eine Aluminiumoxidschicht aufgebracht wird, indem der pH-Wert der Suspension in dem Bereich von 4 bis 9 gehalten wird durch Zugabe einer alkalischen Aluminium-Komponente und einer sauren Aluminium-Komponente oder einer Säure.

8. Verfahren nach Anspruch 6 oder 7 **dadurch gekennzeichnet, dass** abschließend in einem Schritt e) der End-pH-Wert der Suspension auf etwa 6 bis 7 mit Hilfe von Lauge / Säure oder mit einer alkalischen / sauren Salzlösung eingestellt wird.

9. Verfahren nach einem oder mehreren der Ansprüche 6 bis 8 **dadurch gekennzeichnet, dass** die Summe der in den Schritten b) bis e) zugegebenen Aluminium-Komponenten 1,0 bis 9,0 Gew.-% bevorzugt 2,0 bis 8,0 Gew.-% und insbesondere 3,0 bis 6,5 Gew.-% gerechnet als $Al_2O_3$ beträgt.

10. Verfahren nach einem oder mehreren der Ansprüche 6 bis 9 **dadurch gekennzeichnet, dass** die Summe der in den Schritten b) bis e) zugegebenen Phosphor-Komponenten 1,0 bis 5,0 Gew.-% bevorzugt 1,5 bis 4,0 Gew.-% gerechnet als $P_2O_5$ beträgt.

11. Verfahren nach einem oder mehreren der Ansprüche 6 bis 10 **dadurch gekennzeichnet, dass** die Menge der in Schritt c) zugegebenen Silicium-Komponente 0,1 bis 5,0 Gew.-% bevorzugt 1,0 bis 3,0 Gew.-% gerechnet als $SiO_2$ beträgt.

12. Verfahren nach einem oder mehreren der Ansprüche 6 bis 11 **dadurch gekennzeichnet, dass** die Menge der in Schritt c) zugegebenen Titan-Komponente 0,1 bis 6,0 Gew.-% gerechnet als $TiO_2$ beträgt.

13. Titandioxid-Pigment hergestellt nach einem Verfahren gemäß einem oder mehreren der Ansprüche 6 bis 12.

14. Verwendung des Titandioxid-Pigments nach einem oder mehreren der Ansprüche 1 bis 5 oder nach Anspruch 13 bei der Herstellung von Dekorpapier.

15. Dekorpapier enthaltend ein Titandioxid-Pigment gemäß Anspruch 14.


**Claims**

1. Titanium dioxide pigment containing coated rutile titanium dioxide particles, where the coating contains aluminium phosphate, aluminium oxide, titanium oxide and silicon oxide, and the specific surface area to BET is at least 15 $m^2$/g, preferably 20 to 60 $m^2$/g, particularly 20 to 35 $m^2$/g.

2. Titanium dioxide pigment according to Claim 1, **characterised in that** the aluminium content of the coating is 1.0 to 9.0% by weight, preferably 2.0 to 8.0% by weight, particularly 3.0 to 6.5% by weight, calculated as $Al_2O_3$.

3. Titanium dioxide pigment according to Claim 1 or 2, **characterised in that** the phosphorus content of the coating is 1.0 to 5.0% by weight, preferably 1.5 to 4.0% by weight, calculated as $P_2O_5$.

4. Titanium dioxide pigment according to one or more of Claims 1 to 3, **characterised in that** the silicon content of the coating is 0.1 to 5.0% by weight, preferably 1.0 to 3.0% by weight, calculated as $SiO_2$.

**5.** Titanium dioxide pigment according to one or more of Claims 1 to 4, **characterised in that** the titanium content of the coating is 0.1 to 6.0% by weight, calculated as $TiO_2$.

**6.** Method for manufacturing a coated titanium dioxide pigment, comprising the steps

  a) Provision of an aqueous suspension of uncoated titanium dioxide particles,
  b) Addition of an aluminium component and a phosphorus component,
  c) Addition of an alkaline silicon component and at least one pH-regulating component, where one of the pH-regulating components is an acid-reacting titanium component and where the pH of the suspension is set to a value in the range from 4 to 9.

**7.** Method according to Claim 6, **characterised in that**, following Step c), an aluminium oxide layer is applied in a Step d), maintaining the pH value of the suspension in the range from 4 to 9 by adding an alkaline aluminium component and an acidic aluminium component or an acid.

**8.** Method according to Claim 6 or 7, **characterised in that**, in a final Step e), the ultimate pH value of the suspension is set to roughly 6 to 7 with the help of a lye / acid, or with an alkaline / acidic salt solution.

**9.** Method according to one or more of Claims 6 to 8, **characterised in that** the sum total of the aluminium components added in Steps b) to e) is 1.0 to 9.0% by weight, preferably 2.0 to 8.0% by weight, and particularly 3.0 to 6.5% by weight, calculated as $Al_2O_3$.

**10.** Method according to one or more of Claims 6 to 9, **characterised in that** the sum total of the phosphorus components added in Steps b) to e) is 1.0 to 5.0% by weight, preferably 1.5 to 4.0% by weight, calculated as $P_2O_5$.

**11.** Method according to one or more of Claims 6 to 10, **characterised in that** the quantity of silicon component added in Step c) is 0.1 to 5.0% by weight, preferably 1.0 to 3.0% by weight, calculated as $SiO_2$.

**12.** Method according to one or more of Claims 6 to 11, **characterised in that** the quantity of titanium component added in Step c) is 0.1 to 6.0% by weight, calculated as $TiO_2$.

**13.** Titanium dioxide pigment manufactured by a method according to one or more of Claims 6 to 12.

**14.** Use of the titanium dioxide pigment according to one or more of Claims 1 to 5, or according to Claim 13, in the manufacture of decorative laminating paper.

**15.** Decorative laminating paper containing a titanium dioxide pigment according to Claim 14.

**Revendications**

**1.** Pigment de dioxyde de titane, contenant des particules revêtues de dioxyde de titane de type rutile, où le revêtement contient le phosphate d'aluminium, l'oxyde d'aluminium, l'oxyde de titane et l'oxyde de silicium, et où la surface spécifique selon BET se situe à au moins 15 $m^2$/g, de préférence dans l'intervalle allant de 20 à 60 $m^2$/g, en particulier de 20 à 35 $m^2$/g.

**2.** Pigment de dioxyde de titane selon la revendication 1, **caractérisé en ce que** la teneur en aluminium du revêtement se situe dans l'intervalle allant de 1,0 à 9,0% en poids, de préférence de 2,0 à 8,0 en poids, en particulier de 3,0 à 6,5% en poids, calculé comme $Al_2O_3$.

**3.** Pigment de dioxyde de titane selon la revendication 1 ou 2, **caractérisé en ce que** la teneur en phosphate du revêtement se situe dans l'intervalle allant de 1,0 à 5,0% en poids, de préférence de 1,5 à 4,0% en poids, calculé $P_2O_5$.

**4.** Pigment de dioxyde de titane selon l'une ou plusieurs des revendications 1 à 3, **caractérisé en ce que** la teneur en silicium du revêtement se situe dans l'intervalle allant de 0,1 à 5,0% en poids, de préférence de 1,0 à 3,0% en poids, calculé comme $SiO_2$.

**5.** Pigment de dioxyde de titane selon l'une ou plusieurs des revendications 1 à 4, **caractérisé en ce que** la teneur en titane du revêtement se situe dans l'intervalle allant de 0,1 à 6,0% en poids, calculé comme $TiO_2$.

**6.** Procédé de préparation d'un pigment de dioxyde de titane revêtu, comprenant les étapes de

a) Préparation d'une suspension aqueuse de particules de dioxyde de titane non revêtues,
b) Addition d'un composant de l'aluminium et d'un composant du phosphore,
c) Addition d'un composant alcalin du silicium et d'au moins un composant régulant le pH, où un des composants régulant le pH est un composant du titane réagissant de manière acide, et où le pH de la suspension est ajusté à une valeur située dans l'intervalle allant de 4 à 9.

**7.** Procédé selon la revendication 6, **caractérisé en ce que** après l'étape c), dans une étape d), on applique une couche d'oxyde d'aluminium, **en ce que** le pH de la suspension est maintenu dans l'intervalle allant de 4 à 9 par addition d'un composant alcalin de l'aluminium et d'un composant acide de l'aluminium ou d'un acide.

**8.** Procédé selon la revendication 6 ou 7, **caractérisé en ce que** finalement dans une étape e), le pH final de la suspension est ajusté à environ 6 à 7 à l'aide d'une lessive alcaline/un acide ou avec une solution saline alcaline/acide.

**9.** Procédé selon l'une ou plusieurs des revendications 6 à 8, **caractérisé en ce que** la somme des composants de l'aluminium ajoutés dans les étapes b) à e), se situe dans l'intervalle allant de 1,0 à 9,0% en poids, de préférence de 2,0 à 8,0% en poids et en particulier, de 3,0 à 6,5% en poids, calculé comme $Al_2O_3$.

**10.** Procédé selon l'une ou plusieurs des revendications 6 à 9, **caractérisé en ce que** la somme des composants du phosphore ajoutés dans les étapes b) à e), se situe dans l'intervalle allant de 1,0 à 5,0% en poids, de préférence de 1,5 à 4,0% en poids, calculé comme $P_2O_5$.

**11.** Procédé selon l'une ou plusieurs des revendications 6 à 10, **caractérisé en ce que** la quantité des composants du silicium ajoutés à l'étape c) se situe dans l'intervalle allant de 0,1 à 5,0% en poids, de préférence de 1,0 à 3,0% en poids, calculé comme $SiO_2$.

**12.** Procédé selon l'une ou plusieurs des revendications 6 à 11, **caractérisé en ce que** la quantité des composants du titane ajoutés à l'étape c), se situe dans l'intervalle allant de 0,1 à 6,0% en poids, calculé comme $TiO_2$.

**13.** Pigment de dioxyde de titane, préparé par un procédé selon l'une ou plusieurs des revendications 6 à 12.

**14.** Utilisation du pigment de dioxyde de titane selon l'une ou plusieurs des revendications 1 à 5 ou selon la revendication 13, pour la préparation de papier décoré.

**15.** Papier décoré contenant un pigment de dioxyde de titane selon la revendication 14.

**IN DER BESCHREIBUNG AUFGEFÜHRTE DOKUMENTE**

**In der Beschreibung aufgeführte Patentdokumente**

- EP 0713904 B1
- DE 10236366 A1
- DE 10332650 A1
- US 6200375 B